# FASCICULE DE BREVET EUROPEEN

(11) **EP 3 240 430 B1**
(45) Date de publication et mention de la délivrance du brevet: **08.09.2021**
(21) Numéro de dépôt: 15823372.6
(22) Date de dépôt: 28.12.2015
(51) Int. Cl.: A23C 20/00, A23L 27/20

(54) **PROCÉDÉ POUR LA FABRICATION D'UNE DENRÉE ALIMENTAIRE FROMAGÈRE, AVANTAGEUSEMENT DU TYPE FROMAGE, SPÉCIALITÉ FROMAGÈRE OU SUBSTITUT DE FROMAGE**
VERFAHREN ZUR HERSTELLUNG EINES NAHRUNGSMITTELPRODUKTES AUF DER BASIS VON KÄSE, INSBESONDERE KÄSE, KÄSESPEZIALITÄT ODER KÄSEERSATZ
METHOD FOR MANUFACTURING A CHEESE-BASED FOOD PRODUCT, ADVANTAGEOUSLY A CHEESE, CHEESE SPECIALTY, OR CHEESE SUBSTITUTE

(30) Priorité: 30.12.2014 FR 1463439
(43) Date de publication de la demande: 08.11.2017
(73) Titulaire: Institut national de recherche pour l'agriculture, l'alimentation et l'environnement, 75007 Paris (FR); Institut Supérieur Des Sciences Agronomiques, Agroalimentaires, Horticoles Et Du Paysage (Agro Camus Ouest), 35000 Rennes (FR)
(72) Inventeur: GARRIC, Gilles, 35000 Rennes (FR); LEONIL, Joëlle, 35000 Rennes (FR); JEANTET, Romain, 35000 Rennes (FR); GAUCHERON, Frédéric, 35830 Betton (FR); SCHUCK, Pierre, 35131 Chartres de Bretagne (FR); LORTAL, Sylvie, 35000 Rennes (FR)
(74) Mandataire: Jacobacci Coralis Harle
(86) Numéro de dépôt international: PCT/FR2015/053762
(87) Numéro de publication internationale: WO 2016/108024

(56) Documents cités:
- EP-A1- 1 535 519
- WO-A2-2005/046344
- None

## Description

### DOMAINE TECHNIQUE AUQUEL SE RAPPORTE L'INVENTION

La présente invention concerne un procédé pour la fabrication d'une denrée alimentaire fromagère, en particulier du genre fromage, spécialité fromagère ou substitut de fromage.

### ARRIERE-PLAN TECHNOLOGIQUE

Dans le domaine de l'industrie alimentaire, il est fréquent d'utiliser des microorganismes pour la biotransformation d'une matière première de sorte à fabriquer des caractéristiques organoleptiques particulières et à obtenir un produit fini correspondant à la demande du consommateur.

Cette biotransformation est notamment mise en œuvre pour la fabrication de denrées alimentaires fromagères, c'est-à-dire avantageusement les fromages, les spécialités fromagères ou les substituts de fromage.

Les fromages (et en particulier les fromages à pâte molle qui sont parmi les plus typiques de la production fromagère française) s'obtiennent traditionnellement en transformant le lait en un gel ou coagulum, grâce à l'addition d'une enzyme coagulante (présure) et par acidification lactique.

Le liquide interstitiel du gel, c'est-à-dire le lactosérum, est expulsé progressivement par synérèse (connu encore sous le nom de « égouttage »).

Au cours de cette synérèse, le gel se concentre peu à peu en ces éléments principaux (graisse et protéines, avec une certaine quantité de substances minérales), pour aboutir au caillé qui acquiert la forme, la consistance et la composition caractéristiques du fromage souhaité.

Dans le cas des fromages affinés, une flore de microorganismes se développe ensuite dans le caillé de sorte à produire les aromes recherchés : c'est l'affinage.

Cette phase d'affinage est généralement essentielle pour conférer ses qualités aromatiques au produit final.

Toutefois, en pratique, cette phase d'affinage s'effectue sur une période de temps longue (souvent plusieurs semaines, voire plusieurs mois).

En outre, dans un environnement industriel, cette approche traditionnelle présente un certain nombre d'inconvénients à partir du moment où il convient de régulariser et d'uniformiser l'étape d'affinage, ainsi que réduire sa durée.

Des méthodes alternatives de fabrication ont été mises au point de manière à pallier à ces inconvénients.

Dans le document US-7 674 489, un agent aromatique est obtenu par la culture de micro-organismes (mélange de bactéries lactiques et d'aromatisation) sur un rétentat de lait.

Après développement des arômes, les microorganismes sont détruits avant introduction de l'agent aromatique dans une matrice de texture choisie parmi un fromage frais ou un fromage à la crème.

La consistance finale est déterminée par la consistance de la matrice de texture.

Le document EP-1 535 519 divulgue également des procédés pour l'obtention d'une matrice aromatique. Il propose en outre un procédé de fabrication de produits dits EMC pour « Enzyme Modified Cheese », dans lesquels le produit fini est traité thermiquement pour inactiver les enzymes puis éventuellement séché.

Le document WO-2005/046344 décrit des procédés pour la fabrication de produits laitiers, s'appuyant sur une technique de thermo-coagulation d'une pâte aromatisée.

De manière générale, ce procédé comprend la fourniture d'un concentré de protéine et d'un concentré aromatique, puis le chauffage du mélange pour former une masse fromagère coagulée.

Par conséquent, le procédé objet de ces documents US-7 674 489, EP-1 535519 et WO-2005/046344 ne permet pas d'obtenir des fromages dont la consistance de la pâte peut être choisie à façon dans une gamme s'étendant depuis une pâte molle jusqu'à une pâte dure.

De son côté, le document WO-2008/095495 décrit un procédé pour l'obtention d'un fromage de type « fondu ».

Ce document WO-2008/095495 préconise de mélanger un caillé avec un ingrédient aromatique (par exemple un fromage affiné, une poudre de fromage ou un lait fermenté).

Le gel du caillé doit alors être déstructuré, notamment par l'application d'une température élevée (avantageusement entre 50°C et 70°C), pour le mélange homogène et intime des ingrédients.

Ce mélange est ensuite ajusté en pH pour obtenir une masse de fromage homogène qui peut être transformée en bloc en vue de son conditionnement.

Le produit ainsi obtenu consiste en un fromage présentant une consistance souple et crémeuse.

Mais, le procédé objet de ce document WO-2008/095495 oblige une étape supplémentaire de déstructuration du coagulum préalablement obtenu, pour assurer le mélange homogène des matrices.

Dans ce contexte, il existe un besoin pour un procédé qui permet de fabriquer une denrée alimentaire fromagère dont le goût et la texture sont obtenus dès la fin de la fabrication et peuvent être choisis à façon dans toute une gamme, cela sans nécessiter un affinage final ni nécessiter une étape supplémentaire de déstructuration d'un coagulum préalablement obtenu (notamment par l'utilisation de chaleur et/ou de sels de fonte).

### OBJET DE L'INVENTION

La présente invention concerne ainsi un procédé pour la fabrication d'une denrée alimentaire fromagère, par exemple de type fromage, spécialité fromagère ou substitut de fromage.

L'invention vise à réorganiser les grandes phases de la technologie fromagère, afin de les optimiser selon une définition des fonctionnalités et fonctions du produit fini.

Plus précisément, la présente invention consiste notamment à externaliser la production des arômes, en optimisant le triptyque :
- microorganismes d'aromatisation (meilleurs producteurs d'arômes et équilibres aromatiques),
   - milieu de culture adapté (lait, crème, jus végétaux, etc.), et
   - conditions de développement optimales (température, pH, temps, oxygénation, brassage, etc.).

Le procédé selon l'invention consiste à découpler la réalisation de la matrice aromatique et la réalisation de la matrice de texture, puis à les assembler dans des proportions adaptées, avant de texturer le mélange dans des conditions physico-chimiques adaptées.

A cet égard, le procédé de fabrication selon l'invention comprend les étapes suivantes :
a) une étape de fourniture :
   - d'au moins une matrice aromatique, dans une consistance allant de liquide à pâteuse, issue d'une étape de culture d'au moins un microorganisme d'aromatisation dans un milieu de culture,
   - d'au moins une matrice de texture, dans une consistance allant de liquide à pâteuse, qui est adaptée à réaliser la texture de ladite denrée alimentaire,
      laquelle au moins une matrice de texture comprend entre 5% et 25% (de préférence entre 9% et 25%) en poids de protéines et entre 3% et 30% en poids de matière grasse,
      certaines au moins desdites protéines consistant en des protéines coagulantes qui sont aptes à coaguler pour former un gel,
         puis
b) une étape de mélange de ladite au moins une matrice aromatique et de ladite au moins une matrice de texture dont les protéines coagulantes n'ont pas été soumises à une coagulation préalable,
   puis
c) une étape de texturation, au cours de laquelle le mélange issu de l'étape B) est soumis à des conditions physico-chimiques de texturation qui sont destinées à assurer la coagulation desdites protéines coagulantes pour former ledit gel, lesquelles conditions physico-chimiques de texturation sont adaptées en fonction de la texture finale recherchée pour ladite denrée alimentaire.

La matrice de texture consiste en un rétentat qui est issu d'une technique de filtration d'un produit laitier et/ou d'un jus végétal et dans lequel est retenue notamment au moins une partie des protéines du produit laitier et/ou du jus végétal.

Un tel procédé a l'intérêt de permettre l'obtention de la denrée alimentaire finale, avec un large éventail d'arômes et de textures qui sont adaptés à façon dès la fin du procédé de fabrication, économisant ainsi une phase finale d'affinage.

Le coût de fabrication d'une telle denrée alimentaire fromagère est ainsi bien inférieur à celui notamment d'un fromage « classique », puisque la production d'arômes et la texturation peuvent être réalisées en quelques jours (et non en quelques semaines voire en quelques mois).

Le procédé selon l'invention s'appuie en plus sur l'obtention d'une coagulation uniquement après le mélange des matrices, ce qui évite les problèmes attachés aux fromages fondus (notamment déstructuration du gel et emploi de sels de fonte).

Le procédé selon l'invention comporte ainsi une seule et unique structuration des protéines (texturation), avantageusement après une phase de concentration pour obtenir la matrice de texture, qui évite ainsi la solubilisation d'un coagulum en vue de l'étape de mélange avec la matrice aromatique.

Cette technique permet en plus une meilleure régularité du procédé (on externalise la production des arômes), une plus grande latitude quant aux types d'arômes produits et apportés, et une simplification du procédé (on découple la production des arômes par rapport à l'acidification).

Selon d'autres caractéristiques de réalisation, pouvant être prises en combinaison ou indépendamment les unes des autres :
- la matrice de texture consiste avantageusement en un préfromage liquide, rétentat de la filtration d'un lait dans lequel sont retenues notamment les protéines du lait ;
- lors de l'étape de texturation C), les conditions physico-chimiques de texturation sont choisies parmi la température, le pH, la dose de coagulants et la dose de NaCI ; dans ce cas, de préférence, l'étape de texturation C) est ajustée avec les conditions physico-chimiques de texturation suivantes : un pH compris entre 4 et 6,5, de préférence entre 4,5 et 5,7, une température comprise entre 15°C et 50°C, de préférence entre 20 et 40°C, une concentration en sel comprise entre 0,1% et 2%, de préférence comprise entre 0,7 et 0,9%, et, pour un produit laitier, une dose de coagulant (extrait de présure ou protéase) comprise entre 0 et 50 g / 100L, de préférence entre 15 et 30 g / 100 L ;
- lors de l'étape de mélange B), la matrice aromatique est comprise entre 0,5 et 50% en poids, de préférence 0,5 à 10% en poids, du mélange total, bornes incluses ;
- le procédé peut comprendre, suite à l'étape de texturation C), une étape d'application d'au moins un microorganisme de maturation de surface ;
- l'étape de fourniture A) consiste en un procédé pour la production de ladite matrice aromatique, comprenant ladite étape de culture d'au moins un microorganisme d'aromatisation dans un milieu de culture, et/ou un procédé pour la production de ladite matrice de texture dans des conditions physico-chimiques destinées à éviter la formation du gel ; de préférence, pour la fabrication d'un fromage du genre affiné, lors du procédé de production de la matrice aromatique, les microorganismes d'aromatisation comprennent des microorganismes d'affinage ; encore dans ce cas, le milieu laitier de culture consiste avantageusement en du lait ou un produit obtenu à partir du lait choisi parmi la crème, les sérums de fromagerie, les perméats de filtration ; de manière alternative, pour la fabrication d'un substitut de fromage, lors du procédé de production de la matrice aromatique, le milieu de culture consiste avantageusement en un jus végétal, par exemple un jus choisi parmi le jus de soja, le jus de lupin, le jus d'avoine, le jus de riz ou un mélange d'au moins deux desdits jus ; de manière générale, l'étape de culture est de préférence mise en œuvre sur une période de 1 à 4 jours ;
- lors de l'étape de mélange B), ledit au moins un microorganisme d'aromatisation est vivant.

### DESCRIPTION DETAILLEE DE L'INVENTION

La présente invention sera encore illustrée, sans être aucunement limitée, par la description suivante de modes de réalisation particuliers en relation avec les figures annexées dans lesquelles :
- la figure 1 est un schéma bloc illustrant les principales étapes du procédé selon l'invention, pour la fabrication de denrées alimentaires fromagères ;
- la figure 2 est un schéma bloc illustrant les principales étapes du procédé pour la fabrication d'une matrice aromatique utilisée dans le procédé de fabrication selon la figure 1.

De manière générale, la présente invention concerne un procédé pour la fabrication d'une denrée alimentaire fromagère.

Le procédé de fabrication selon l'invention a l'intérêt de permettre l'obtention des arômes et de la texture du produit final dès la fin de ce procédé.

La denrée alimentaire fromagère selon l'invention, comprenant avantageusement des arômes de fromage affiné, peut ainsi être consommée peu après sa fabrication, sans nécessiter son maintien pendant un laps de temps à une température et dans des conditions nécessaires pour que s'opèrent les changements biochimiques et physiques caractéristiques des microorganismes d'aromatisation.

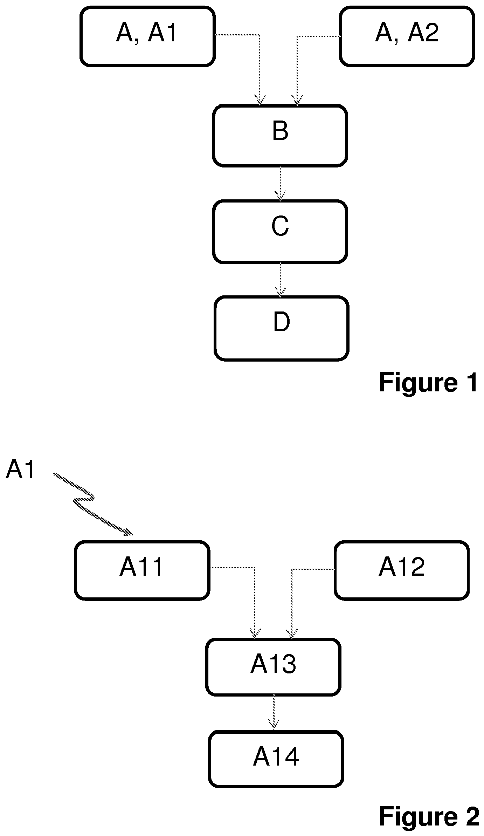

Pour cela, tel que représenté schématiquement sur la figure 1, ce procédé de fabrication comprend les étapes successives suivantes :
A) une étape de fourniture :
   A1) d'au moins une matrice aromatique, dans une consistance (ou forme) allant de liquide à pâteuse, issue d'une étape de culture d'au moins un microorganisme d'aromatisation dans un milieu de culture, et
   A2) d'au moins une matrice de texture, dans une consistance (ou forme) allant de liquide à pâteuse, qui est adaptée à réaliser la texture de ladite denrée alimentaire,
B) une étape de mélange de ladite au moins une matrice aromatique et de ladite au moins une matrice de texture, puis
C) une étape de texturation, au cours de laquelle le mélange issu de l'étape de mélange B) est soumis à des conditions physico-chimiques de texturation qui sont adaptées en fonction de la texture finale recherchée pour ladite denrée alimentaire, et
D) éventuellement une étape d'application d'au moins un microorganisme de maturation de surface.

### Définitions générales

Dans le cadre de la présente invention, une « denrée alimentaire fromagère » est avantageusement une substance ou un produit transformé, destiné à être ingéré par l'être humain, qui consiste en un fromage proprement dit ou qui est destiné à remplacer un tel fromage.

Une telle denrée alimentaire fromagère englobe avantageusement les produits alimentaires du genre fromage, spécialité fromagère ou substitut de fromage.

Un « fromage » est un produit fermenté ou non, affiné ou non, obtenu à partir de matières d'origine exclusivement laitière, coagulée en tout ou en partie avant égouttage ou après élimination partielle de la partie aqueuse.

Une « spécialité laitière » est un produit laitier autres que les fromages, les fromages blancs et les bleus, fermentés ou non, affinés ou non, préparés à partir des matières d'origine exclusivement laitière, auxquelles d'autres matières provenant exclusivement du lait peuvent être ajoutées, utilisées seules ou en mélange.

Un « substitut de fromage » est un produit alimentaire destiné à remplacer le fromage, fabriqué principalement à partir de matière première végétale (jus de céréale, de légumineuse, etc. par exemple de type jus de soja, jus d'avoine, jus d'amande, etc.).

De tels substituts de fromages sont encore dénommés « fromages végétaliens », « fromages végétaux » ou « fromages analogues ».

Chez un individu, la consommation d'une telle denrée alimentaire fromagère va conduire à une perception d'une flaveur.

La « flaveur » correspond à l'ensemble des sensations olfactives, gustatives et trigéminales perçues durant la dégustation d'un aliment.

Ces sensations permettent la perception de différents stimuli orosensoriels :
- les saveurs, dits encore « composés sapides » ou « stimuli sapides » (en particulier associées à la sensation gustative),
- les arômes, dits encore « composés odorants » ou « stimuli olfactifs » ou « stimuli odorants » (en particulier associés à la sensation olfactive), et/ou
- les composés trigéminaux (en particulier associés à la sensation somesthésique et plus précisément la perception trigéminale).

Dans la présente invention et dans un souci de simplification, la notion de « arôme » sera utilisée de manière équivalente à la notion de flaveur, englobant ainsi la notion d'arôme proprement dite mais aussi les notions de saveur et de composés trigéminaux.

Par « saveur », on entend en particulier un stimulus perçu par les récepteurs gustatifs situés sur la langue.

La dynamique de perception de la saveur est en particulier gouvernée par la libération temporelle de composés non volatiles qui se dissolvent dans la salive.

Par « saveur », on entend en particulier les saveurs de base : le sucre, le salé, l'acide, l'amer et l'umami. On entend aussi la sensation du gras (notamment les acides gras tels que l'acide oléique).

Par « arôme », on entend la perception liée à la dynamique de libération de molécules volatiles odorantes dans la sphère orosensorielle.

De tels stimuli olfactifs consistent généralement en des molécules volatiles qui doivent être libérés du produit afin d'atteindre les récepteurs olfactifs situés dans la cavité nasale.

Lorsque le composé d'intérêt est en bouche, cette perception s'effectue en particulier au travers de la voie « rétro-nasale ».

Encore par ailleurs, par « texture » ou « consistance », on entend un ensemble des propriétés rhéologiques et de structure (géométrique et de surface) de la denrée alimentaire fromagère, perceptibles par les mécanorécepteurs, les récepteurs tactiles et, éventuellement, visuels et auditifs du consommateur.

Dans la présente invention, la consistance de la denrée alimentaire fromagère est avantageusement du genre pâte.

Cette notion de pâte englobe avantageusement un panel de consistances suivantes : pâte dure, pâte demi-dure, pâte demi-molle, pâte molle, pâte tartinable.

Les différentes notions de technologies fromagères, y compris la consistance, sont décrites dans les documents suivants :
- Norme FAO/OMS n° A-6 - Fromages (1978, modifiée en 1990) ;
- Spécification technique n° B3-07-09 applicable aux laits et aux produits laitiers (date de publication : novembre 2009) (Direction des affaires juridiques - France) ;
- Décrets n°2007-628 du 27 avril 2007 et n°2013-100 du 12 novembre 2013, relatifs aux fromages et spécialités fromagères (Ministère de l'économie et des finances - France).

De manière générale, selon l'invention, l'ensemble des domaines indiqués s'entendent bornes incluses.

### Sur la matrice aromatique

La matrice aromatique, dans une consistance allant de liquide à pâteuse, constitue un produit qui est destiné à apporter les arômes d'intérêt au produit final.

Cette matrice aromatique est obtenue au travers d'un procédé de culture d'au moins un microorganisme d'aromatisation, dans un milieu de culture, avantageusement un milieu laitier de culture (de préférence pour les fromages et les spécialités fromagères) ou un milieu végétal de culture (de préférence pour les substituts de fromage).

Les microorganismes d'aromatisation en question, dits encore « levains aromatiques », sont choisis parmi les microorganismes aptes à produire des arômes qui sont recherchés pour la denrée alimentaire fromagère finale.

Dans le cas d'un milieu de culture (laitier ou jus végétal), les arômes sont avantageusement développés par la libération des produits terminaux d'une protéolyse (acides aminés) et/ou d'une lipolyse et/ou d'une transformation des sucres.

Ces arômes d'intérêt consistent avantageusement en des arômes rencontrés dans le fromage, de préférence encore choisis parmi les composés suivants :
- l'oct-1-en-3-ol (champignon),
- le 2-phényléthanol et le phénylacétaldéhyde (note florale),
- le 1,6-diméthoxybenzène et l'ester méthylique de l'acide cinnamique (note de noisette),
- le 2,4-dithiapenthane, le 2,4,5-trithiahexane et le 3-méthylthio-2,4-dithiapentane (note alliacée),
- le sulfure de méthyle, le disulfure de diméthyle, le 3-méthylthiopropanal et le méthanethiol (Epoisse, Vacherin, Pont-l'Evêque, Limburger), parfois l'indole et l'acide propionique et le diacétyle (Swiss cheese).

De tels arômes sont ainsi obtenus par la culture de microorganismes d'aromatisation (ou « microorganisme d'intérêt aromatique »), qui englobe les bactéries, les levures ou les moisissures.

Ces micro-organismes d'aromatisation comprennent avantageusement les microorganismes d'affinage (ou « flore d'affinage » ou « ferments d'affinage »).

Les microorganismes d'affinage comprennent les moisissures et/ou les levures et/ou les bactéries qui se développent habituellement dans la pâte d'un fromage, voire à la surface des pâtes à croûte fleurie, lavée ou emmorgée.

Ces microorganismes d'affinage comprennent :
- les moisissures, comme *Penicillium camemberti* ou *Penicillium roqueforti ;*
- les levures, appartenant notamment aux genres *Saccharomyces, Candida* (*Candida utilis*), *Geotrichum* (par exemple *Geotrichum candidum*) et *Debaryomices hanseni* ; et
- les bactéries, telles que les bactéries propioniques *(Propionibacterium),* et diverses bactéries dites gram positif *(Lactobacillus,* de préférence *Lactobacillus rhamnosus,*

*Lactobacillus paracasei, Lactobacillus fermentum)* ; parmi les bactéries, on peut citer encore *Staphylococcus xylosus, Brevibacterium linens* ou *casei.*

Les microorganismes d'aromatisation peuvent encore être choisis par exemple parmi *Hafnia alvéi, Yarrovia lipolytica.*

De tels microorganismes d'aromatisation peuvent encore être choisis parmi les microorganismes proposés par les sociétés CHR HANSSEN (par exemple dans la gamme DVS™), STANDA (par exemple dans la gamme PAL™) ou DANISCO (par exemple dans la gamme CHOOZIT™ Cheese Cultures).

Les microorganismes d'aromatisation mis en œuvre proviennent d'une espèce ou d'une combinaison d'au moins deux espèces qui appartiennent à un même règne ou à des règnes différents.

Chaque espèce de microorganismes provient, en outre, d'une souche unique ou d'une combinaison d'au moins deux souches.

Plus généralement, les microorganismes d'aromatisation peuvent encore être choisis parmi tout autre microorganisme qui est apte à produire des arômes par biotransformation et qui est rencontré dans le domaine de l'industrie alimentaire (Techniques de l'Ingénieur - f3501 - « Fabrication de produits alimentaires par fermentation : l'ingénierie » - 10/09/2014 - Alain BRANGER).

Par exemple, les microorganismes d'aromatisation peuvent consister encore en des bactéries lactiques acidifiantes et productrices d'arômes telles que *Lactococcus lactis ssp lactis* et *ssp cremoris* ou *var diacetylactis, Lactococcus cremoris, Streptococcus thermophilus, Leuconostocs mesenteroides ssp cremoris.*

De son côté, le milieu laitier de culture constitue un substrat qui est choisi parmi le lait et ses dérivés : la crème, les sérums de fromagerie ou les perméats de filtration (ultrafiltration, microfiltration, nanofiltration).

Par « lait », on entend avantageusement un lait issu d'un ruminant, par exemple vache, chèvre, brebis ou bufflonne.

Le lait peut se présenter sous différentes formes : lait entier, lait demi-écrémé, lait écrémé ; le lait peut également se présenter sous forme de lait cru ou de lait pasteurisé, de lait frais microfiltré, de lait stérilisé, de lait stérilisé UHT.

La crème est un lait contenant au moins 30 g de matière grasse (provenant exclusivement du lait) pour 100 g de poids total.

Les sérums de fromagerie consistent en un co-produit de la fabrication fromagère, depuis les fabrications pâtes fraîches, molles, pressées et cuites.

Les perméats de filtration consistent en un co-produit lors de la concentration d'un lait sur une membrane de filtration (ultrafiltration, microfiltration ou nanofiltration).

Le milieu végétal de culture constitue quant à lui un substrat qui est choisi parmi les jus végétaux, par exemple jus de soja, jus de riz, jus d'amande, etc.

En pratique, tel qu'illustré sur la figure 2, les microorganismes d'aromatisation A11 sont incorporés dans le milieu de culture A12 au cours d'une étape de mélange A13, permettant ensuite la mise en œuvre d'une étape de culture A14 dans des conditions physico-chimiques optimales jusqu'à obtention de la matrice aromatique d'intérêt.

Les conditions physico-chimiques de l'étape de culture A14, notamment la température, le pH, l'oxygénation et le brassage, sont adaptées en particulier pour obtenir une production optimale des arômes par les microorganismes d'aromatisation.

Les conditions physico-chimiques en question sont par exemple présentées dans le document Techniques de l'Ingénieur - f3501 - « Fabrication de produits alimentaires par fermentation : l'ingénierie » - 10/09/2014 - Alain BRANGER.

Par exemple, lors de l'étape de culture A14, la matrice aromatique peut être réalisée dans une cuve ou dans un fermenteur, selon la typicité aromatique voulue.

La durée de cette étape de culture A14 est avantageusement de l'ordre de 1 à 4 jours.

Dans le milieu laitier de culture, il peut également être ajouté des enzymes, des substrats additionnels fonctions des microorganismes mis en œuvre.

La matrice aromatique ainsi obtenue (à l'issue de l'étape de culture A14) présente une consistance non solide, par exemple liquide, semi-liquide, semi-pâteuse ou pâteuse.

Cette matrice aromatique contient un concentré des arômes recherchés (ou plus généralement les flaveurs), qui sont produits par les microorganismes d'aromatisation au travers de la biotransformation du milieu de culture.

### Sur la matrice de texture

La matrice de texture est choisie parmi les matières premières adaptées à réaliser la texture finale de la denrée alimentaire fromagère.

Une telle matrice de texture comprend pour cela des protéines et la matière grasse :
- entre 5% et 25 en poids de protéines, de préférence de 9% et 25% en poids de protéines, et
- entre 3% et 30% en poids de matière grasse.

Parmi les protéines de cette matrice de texture, certaines au moins consistent en des protéines dites « coagulantes », c'est-à-dire qui sont aptes à former un gel (gel protéique) ou « coagulum » lors d'un processus de coagulation.

La gélification des protéines est obtenue avantageusement à partir de protéines solubles (ovalbumine, protéines de soja, protéines du lactosérum, etc.).

Dans certains cas, l'acidification est nécessaire.

L'addition de sels ou d'ions peut augmenter la vitesse de gélification ou la fermeté du gel obtenu.

Les protéines coagulantes sont avantageusement choisies parmi les protéines aptes à gélifier sans chauffage ou au moins sans chauffage significatif (inférieur à 50°C et de préférence inférieur à 40°C) :
- soit par voie enzymatique (micelle de caséine, fibrine, protéines du blanc d'œuf),
- soit par addition d'ions (calcium et caséine),
- soit encore par une alcalinisation suivie d'un retour à la neutralité ou au pl de la protéine (protéine de soja).

De manière alternative, les protéines coagulantes peuvent encore être choisies parmi les protéines aptes à gélifier avec chauffage (supérieur à 70°C), c'est-à-dire des protéines dites thermocoagulantes.

Dans la présente matrice de texture, les protéines sont dans une forme « native », c'est-à-dire qu'elles n'ont pas été soumises à une coagulation préalable (sans étape préalable de texturation).

Cette matrice de texture n'est alors pas soumise à une étape préalable de déstructuration d'un coagulum, pour permettre son mélange intime avec la matrice d'aromatisation.

Une telle matrice de texture est avantageusement choisie parmi les produits à base de lait (matrice de texture « laitière »), ou de jus végétal (matrice de texture « végétale »).

La matrice de texture présente une consistance non solide, par exemple liquide, semi-liquide, semi-pâteuse ou pâteuse.

Par « produit à base de lait », on entend notamment le lait en tant que tel, mais aussi la crème, le babeurre, les lactosérums ou les perméats de filtration.

Par exemple, les protéines coagulantes sont des caséines, dont la forme native consiste en une forme de micelles de caséines.

Pour former un gel, la présure hydrolyse la caséine kappa ; on obtient avec cette réaction deux dérivés : le caséino-macro-peptide hydrophile et électriquement négatif, et la para-caséine-kappa hydrophobe ; les para-caséines-kappa vont se lier entre elles grâce à des interactions électrostatiques, des liaisons hydrogènes, hydrophobes ainsi que des ponts calciques, aboutissant audit gel.

Ce produit à base de lait est avantageusement standardisé sur le plan physicochimique, notamment :
- en matière grasse : niveau (taux butyreux), état (homogénéisé ou non),
- en matière protéique : rapport protéine sérique/caséine,
- taux de lactose,
- sur le plan minéral : taux de calcium et de phosphore.

La matière première de départ peut également faire l'objet d'une standardisation microbiologique :
- par le biais d'un traitement thermique (couple temps/température), et
- un traitement mécanique, par exemple de type microfiltration.

La matière première de départ est avantageusement concentrée par une technique de filtration, jusqu'à un facteur de concentration souhaité (Facteur de concentration volumique - « FCV ») de sorte à obtenir une texture optimale (par exemple un facteur FCV compris entre 3 et 7).

La technique de filtration mise en œuvre est avantageusement choisie parmi les techniques d'ultrafiltration, de microfiltration, de nanofiltration, associées ou non à de la diafiltration.

La matrice de texture ainsi obtenue consiste par exemple en un produit couramment désigné « préfromage liquide » (ou « pre-cheese » en anglais).

Le procédé d'obtention de ce préfromage liquide, ainsi que ses caractéristiques, sont décrits par exemple dans les documents :
- Maubois et al. « Application of Membrane Ultrafiltration to Preparation of Various Types of Cheese », Journal of Dairy Science, Vol. 58, n°7, ou
- Goudédranche et al. « Utilization of the new minerai UF membranes for making semi-hard cheeses », Desalination, 35 (1980) 243-258.

Un tel préfromage liquide consiste ainsi en un lait enrichi en protéines (caséine et protéines solubles), formant un rétentat de filtration qui comprend une teneur en protéines adaptée au fromage souhaité et qui possède la composition d'un caillé en fin d'égouttage tout en restant liquide (sans coagulation de ses protéines coagulantes).

Le facteur de concentration volumique d'un tel préfromage liquide est avantageusement compris entre 4 et 7.

L'opération de filtration est pour cela effectuée sur une membrane semi-perméable dont la perméabilité est telle que seuls les éléments solubles du lait (c'est-à-dire essentiellement le lactose, et les sels minéraux solubles et les substances azotées non protéiques) passent au travers de ladite membrane (par exemple en ultrafiltration).

Cette étape de filtration est par exemple développée dans le document Pouliot - International Diary Journal - 18 (2008) 735-740.

A titre indicatif, l'opération de filtration est mise en œuvre dans les conditions suivantes :
- l'ultrafiltration dont le seuil de coupure varie entre 2 000 et 150 000 Da et la pression appliquée entre 2 et 10 x10⁵ Pa,
- la microfiltration dont le seuil de coupure est supérieur à 150 000 Da et la pression appliquée entre 0,2 et 1 x10⁵ Pa,
- la nanofiltration dont le seuil de coupure varie entre 200 et 1000 Da et la pression appliquée entre 10 et 40 x10⁵ Pa.

Cette opération, par exemple d'ultrafiltration, permet ainsi d'obtenir deux liquides :
- un premier liquide traversant la membrane, appelé « filtrat » ou « perméat », formant une sorte de lactosérum dépourvu de substances azotées protéiques ainsi que des substances (caséino-macropeptides et glyco-macropeptides) que la présure détache de la caséine lors de la coagulation ; et
- un second liquide retenu par la membrane, formant le rétentat précité, formant le lait enrichi en protéines (caséine et protéines solubles).

Ce préfromage liquide peut éventuellement être ajusté en matière grasse, notamment par l'ajout de crème.

Par ailleurs, par « produit à base de jus végétal », on entend en particulier les jus de soja, d'avoine, d'amande, de pois, de lupin, d'avoine, de riz, etc.

Le produit à base de jus végétal peut consister en un mélange d'au moins deux de ces jus, de préférence un jus de soja avec au moins un autre jus.

Par exemple, la matrice de texture comprend un mélange :
- jus de soja avec jus d'avoine, dont avantageusement le pourcentage en poids de jus d'avoine est compris entre 5 et 10%, et
- jus de soja avec jus de lupin, dont avantageusement le pourcentage en poids de jus de lupin est compris entre 35% et 45%.

Tel que développé ci-dessus, la matière première de départ est avantageusement concentrée par une technique de filtration, jusqu'à un facteur de concentration souhaité de sorte à obtenir une texture optimale (par exemple un facteur FCV compris entre 3 et 7).

La technique de filtration mise en œuvre est avantageusement choisie parmi les techniques d'ultrafiltration, de microfiltration, de nanofiltration, associées ou non à de la diafiltration.

Un tel jus végétal consiste ainsi en un jus végétal enrichi en protéines, formant un rétentat de filtration qui comprend une teneur en protéines adaptée au substitut de fromage souhaité.

Le facteur de concentration volumique d'un tel jus végétal est avantageusement compris entre 4 et 7.

L'opération de filtration est pour cela effectuée sur une membrane semi-perméable dont la perméabilité est telle que seuls les éléments solubles du jus passent au travers de ladite membrane.

Le jus végétal peut également être obtenu à partir d'une farine mise en suspension dans un liquide (avec par exemple un ratio de l'ordre de 1/5) pendant un temps adapté (par exemple 10 à 30 min), qui est ensuite filtrée pour obtenir un jus végétal concentré formant le produit à base de jus végétal.

Le produit de départ peut également consister en une base de produit laitier associé à un jus végétal.

Dans ce cas, le ratio varie par exemple entre 10% et 90% pour un premier constituant, par rapport au second constituant.

### Sur l'étape de mélange

La matrice de texture et la matrice aromatique sont mélangées dans des proportions à façon (étape B - figure 1).

Par exemple, la matrice aromatique constitue entre 0,5 et 50 % en poids, de préférence entre 0,5 et 10 % en poids, du mélange total.

De préférence, le mélange est maintenu à une température maximale de 40°C.

Le temps et le type de mélange doivent être adaptés à une parfaite répartition de la matrice d'aromatisation dans la matrice de texture.

Par exemple, le mélange peut se faire dans une cuve raclée, dans un échangeur à surface raclée ou dans un mélangeur statique.

Dans ce mélange, différents additifs peuvent être incorporés, par exemple des produits autorisés tels que des colorants ou des régulateurs d'acidité.

De plus, cette denrée alimentaire fromagère est dépourvue de sels de fonte, qui permettent la non-séparation des éléments après l'arrêt du brassage.

Les principaux sels de fonte sont les polyphosphates et orthophosphates de sodium, le citrate de sodium et l'acide citrique.

### Sur l'étape de texturation

Le mélange obtenu à l'issue de l'étape de mélange B) fait ensuite l'objet d'une étape de texturation C) qui est adaptée en fonction de la texture finale recherchée pour la denrée alimentaire.

Ce procédé selon l'invention comporte ainsi une étape de texturation uniquement après une étape de mélange des matrices.

Cette texturation consiste à soumettre le mélange à des conditions physico-chimiques de texturation qui sont adaptées à former le gel ou « le coagulum » par le biais des protéines coagulantes précitées.

Par « texturation », on englobe ainsi deux types de coagulations, alternatives ou complémentaires : la coagulation lactique ou coagulation acide (voie fermentaire ou voie chimique) et la coagulation présure (voie enzymatique).

De préférence, un tel gel est avantageusement constitué essentiellement d'un gel de protéines coagulantes (de préférence de caséine) retenant les globules gras et une partie plus ou moins importante de la phase aqueuse des matrices.

Les protéines coagulantes passent ainsi, pour la première fois, d'une forme non-coagulée à une forme coagulée.

Les conditions physico-chimiques de texturation, auxquelles le mélange est soumis, sont en particulier choisies parmi :
- la température,
- le pH,
- la dose de coagulant,
- la concentration en sel, en particulier la concentration en NACl, et
- éventuellement une dose de texturant (gélifiant et/ou épaississant).

Le réglage de ces paramètres de texturation peuvent s'effectuer tenant compte des documents suivants :
- Karlsson et al. « Influence of pH and NaCI on rheological properties of rennet-induced casein gels made from UF concentrated skim milk » - International Diary Journal 17 (2007) 1053-1062) ;
- Maubois et al. « Application of Membrane Ultrafiltration to Preparation of Various Types of Cheese », Journal of Dairy Science, Vol. 58, n°7;
- Goudédranche et al. « Utilization of the new minerai UF membranes for making semi-hard cheeses », Desalination, 35 (1980) 243-258;
- Waungana et al. "Rennet coagulation properties of skim milk concentrated by ultrafiltration: effects of heat treatment and pH adjustement" - Food Research International, Vol. 31, No 9, pp 645-651, 1998.

En particulier, dans le cas d'une matrice de texture « végétale », deux modes de texturation sont adaptés :
- par acidification, au moyen par exemple de glucono-delta-lactone (GDL) et/ou ferments, ou
- par thermocoagulation, en présence par exemple de lactate de calcium ou de sulfate de calcium.

Par exemple, et de manière non-limitative, les doses de coagulants sont de 2 à 5% de sulfate de calcium ou de 3 à 10% de lactate de calcium ou de 1 à 5% de GDL.

En pratique, pour les différentes matrices de texture, les conditions physico-chimiques de texturation suivantes sont avantageusement mises en œuvre en fonction de la texture recherchée :
- un pH compris entre 4 et 6,5, de préférence entre 4,5 et 5,7,
- une température comprise entre 15°C et 50°C (de préférence entre 20°C et 40°C), ou éventuellement une température supérieure à 70°C dais le cas d'une thermocoagulation,
- une concentration en NaCI comprise entre 0,1 % et 2 %, de préférence comprise entre 0,7 % et 0,9 %, et
- dans le cas d'une matrice de texture laitière, une dose de coagulant (en particulier un extrait de présure) comprise entre 0 g / 100 L et 50 g / 100 L, de préférence entre 15 g / 100 L et 30 g / 100 L, et éventuellement
- une dose de texturant (gélifiant et épaississant) comprise, d'une part, entre 0 et 0,6 kg/100 L, de préférence comprise entre 0,2 et 0,4 kg/100 L, de gélifiant et, d'autre part, de 0 à 4 kg/100 L, de préférence comprise entre 1,5 et 2 kg/100 L d'épaississant.

Les paramètres ci-dessus sont en particulier optimums dans le cas d'un mélange dont la matrice de texture est un préfromage liquide.

L'ajustement du pH peut être obtenu par diverses voies :
- ajout d'acide D-gluconique delta-lactone (GDL),
- ajout de lait ou de rétentat pré-acidifié,
- ajout de ferments acidifiants,
- ajout d'acide lactique.

Cet ajustement du pH s'effectue avantageusement de manière lente et régulière, avantageusement sur une période de temps comprise entre 20 min et 30 min.

Si nécessaire, les texturants peuvent être incorporés dans la matrice de texture, avant son mélange avec la matrice aromatique.

Ces paramètres de texturation sont en plus avantageusement ajustés de sorte que les microorganismes d'aromatisation restent vivants.

En particulier, les conditions physico-chimiques de texturation sont ajustables de sorte à permettre l'obtention d'une denrée alimentaire fromagère formant une pâte dont la texture est ajustable à façon depuis une pâte tartinable jusqu'à une pâte dure.

Plus précisément, ces conditions physico-chimiques de texturation sont ajustables pour obtenir un fromage dont la pâte comporte l'une des textures/duretés suivantes :
- une pâte tartinable,
- une pâte molle,
- une pâte demi-molle,
- une pâte demi-dure, et
- une pâte dure.

En d'autres termes, les résultats de dureté se situent dans une gamme comprise entre 3 kg.f⁻¹ et 40 kg.f⁻¹.

Par exemple, la dureté est :
- inférieure à 10 kg.f⁻¹ pour les pâtes tartinables selon le type,
- de l'ordre de 20 kg.f⁻¹ pour les pâtes molles, et
- de l'ordre de 30 kg.f⁻¹ pour les pâtes dures.

Quelques conditions physico-chimiques de texturation sont données à titre d'exemples ci-dessous.

Pour l'obtention d'un fromage à pâte molle :
- un pH compris entre 4 et 6,5, de préférence entre 5,0 et 5,5,
- une température comprise entre 15°C et 40°C, de préférence entre 20 et 35°C,
- une concentration en NaCI comprise entre 0,1 % et 2 %, de préférence comprise entre 0,7 % et 0,9 %,
- une dose de coagulant (extrait de présure) comprise entre 0 g / 100 L et 50 g / 100 L, de préférence entre 15 g / 100 L et 25 g / 100 L,
- éventuellement une dose de gélifiant compris entre 0 à 0,6 kg/100 L, de préférence entre 0,2 à 0,4 kg/100 L, et une dose d'épaississant de 0 à 4 kg/100 L, de préférence comprise entre 1,5 et 2 kg/100 L.

Pour l'obtention d'un fromage à pâte dure :
- un pH compris entre 4 et 6,5, de préférence entre 5,2 et 5,7,
- une température comprise entre 15°C et 40°C, de préférence entre 25 et 40°C,
- une concentration en NaCI comprise entre 0,1 % et 2 %, de préférence comprise entre 0,7 % et 0,9 %,
- une dose de coagulant (extrait de présure) comprise entre 0 g / 100 L et 50 g / 100 L, de préférence entre 25 g / 100 L et 30 g / 100 L,
- éventuellement une dose de gélifiant compris entre 0 et 0,6 kg/100 L, de préférence comprise entre 0,3 et 0,4 kg/100 L, et une dose d'épaississant comprise entre 0 et 4 kg/100 L, de préférence comprise entre 1,5 et 2 kg/100 L.

Pour l'obtention d'un fromage à pâte tartinable :
- un pH compris entre 4 et 6,5, de préférence entre 4,8 et 5,2,
- une température comprise entre 15°C et 40°C, de préférence entre 15 et 25°C,
- une concentration en NaCI comprise entre 0,1 % et 2 %, de préférence entre 0,1 % et 0,9 %,
- une dose de coagulant (extrait de présure) comprise entre 0 g / 100 L et 50 g / 100 L, de préférence entre 3 g / 100 L et 10 g / 100 L,
- éventuellement une dose de gélifiant comprise entre 0 et 0,6 kg/100 L, de préférence entre 0,15 et 0,20 kg/100 L et une dose d'épaississant de 0 à 4 kg/100 L, de préférence entre 1 et 1,5 kg/100 L.

### Sur une étape supplémentaire optionnelle d'affinage de surface

L'étape de fabrication peut comporter une étape finale D) au cours de laquelle au moins un micro-organisme de maturation de surface est appliqué.

Un tel micro-organisme est par exemple choisi parmi : *Penicillium camemberti* et/ou *Geotrichum candidum,* voire *Brevibacterium linens.*

La denrée alimentaire fromagère est alors conservée pendant un temps suffisant et dans des conditions adaptées (notamment de température et de temps), de sorte à obtenir un développement de la flore de surface.

De préférence, cette denrée alimentaire fromagère peut être laissée dans un hâloir pour la pousse de micro-organismes de surface, cela pendant quatre à cinq jours et à une température comprise entre 8°C et 15°C.

### Denrée alimentaire fromagère - Produit final

La denrée alimentaire fromagère ainsi obtenue, à l'issue de l'étape de texturation C) (voire de l'étape d'affinage de surface D)), peut être consommée immédiatement.

Cette denrée alimentaire comprend :
- une texture issue de la transformation physicochimique de la matrice de texture, et
- des arômes (ou plus généralement des flaveurs), provenant de la matrice d'aromatisation.

De plus, cette denrée alimentaire fromagère ne comporte pas de sels de fonte.

Cette denrée alimentaire fromagère texturée peut être conditionnée, puis être réfrigérée. Dans cette denrée alimentaire fromagère, les microorganismes d'aromatisation sont :
- vivants, ou
- détruits si nécessaire, notamment pour certaines applications (distribution grand export, consommation hors froid).

Pour conserver les microorganismes vivants, l'homme du métier est apte à ajuster les différentes étapes de fabrication de sorte à éviter des conditions susceptibles de détruire les microorganismes.

Inversement, la destruction des microorganismes peut être obtenue par le biais d'une technologie de stérilisation adaptée, par exemple par l'application d'un barème temps / température dont la fourchette est comprise entre 70°C et 120°C pendant 1 à 10 minutes.

### EXEMPLES

### 1. Exemple 1 : Etude de l'influence des principaux leviers de texturation de la pâte (pH et température de texturation, dose de coagulant et de NaCl).

### Méthode

Intégrées dans un chemin technologique, les étapes optimisées sont :
**1.** Stabilisation : traitement thermique drastique du lait : 93°C pendant 3 minutes
**2.** Standardisation TB/TP = 1,2 (écrémage en phase descendante)
**3.** Egouttage : concentration par UF du lait standardisé (gras)
**4.** Texturation :
   - Acidification : GDL ou acide lactique (produit selon la méthode « NIZO »)
   - [Salage : NaCl]
   - [« Affinage » (production d'arômes)] introduits
   - Leviers : pH / température / [coagulant], [NaCl]

### Résultat

Les 4 principaux leviers intervenant dans la texturation de la matrice (pH, température, [NaCl] et [coagulant]) ont été testés seuls (réalisation d'une gamme) et combinés (gamme de température pour une gamme de pH donnés, avec [NaCl] et [coagulant] fixes).

Les produits finis ont été analysés par analyses instrumentales de Profil de Texture (TPA) : dureté, adhésivité, élasticité, cohésion sur le texturemètre LOYD AMETEK (TA1).

Les résultats de dureté (approche « fermeté » de la pâte essentiellement travaillée dans un premier temps) se situent dans une gamme comprise entre 3 kg.f⁻¹ pour un produit non emprésuré jusqu'à 30 kg.f⁻¹ pour un produit structuré.

Par exemple pour une texture pâte molle, avec un préfromage dont le FCV est de 5,7, les points caractéristiques de la texturation sont :
- pH : 5,25
- température : 25°C
- dose d'extrait de présure : 0,2 g / L
- dose de NaCI : 0,8%
Le résultat de dureté sur le LOYD AMETEK donne 22 kg.f⁻¹.

Pour une pâte pressée, avec un préfromage dont le FCV est de 6,5 :
- pH : 5,35
- température : 35°C
- dose d'extrait de présure : 0,3 g / L
- dose de NaCI : 0,8%

Le résultat de dureté sur le LOYD AMETEK donne 31 kg.f⁻¹.

Pour une pâte tartinable, avec un préfromage dont le FCV est de 5,1 :
- pH : 5,00
- température : 17°C
- dose d'extrait de présure : 0,05 g / L
- dose de NaCI : 0,3%
Le résultat de dureté sur le LOYD AMETEK donne 8 kg.f⁻¹.

L'étendue de la gamme est importante et permet donc de réaliser une fermeté adéquate.

### 2. Exemple 2 : Production d'acide, gestion du pH de texturation :

Les inventeurs ont également travaillé sur l'obtention du pH de texturation selon diverses voies (afin d'obtenir la meilleure structure).

Le pH de texturation souhaité a été obtenu :
- par ajout de GDL (lyzactone),
- par ajout de ferments acidifiant hyper rapides : *Streptococcus thermophilus, Lactobacillus bulgaricus, Lactobacillus helveticus,*
- par ajout d'acide lactique préparé selon la méthode « NIZO » (acidification produite par *Lactobacillus helveticus)* sur un milieu lait écrémé concentré à 16% de matière sèche par ajout de poudre de lait (voir « Les produits laitiers », 2ème édition, Edition Tec et Doc Lavoisier).

La meilleure texture (la plus fine) est obtenue par ajout de GDL (cinétique d'acidification progressive : 20 minutes).

L'ajout d'acide (méthode « NIZO » en mimant la cinétique GDL : 20 minutes), et mélange au blender, donne un produit pré-foisonné.

Le mélange réalisé avec un pâle tournant à vitesse lente (60 tour.min⁻¹) donne la texture la plus proche de celle obtenue avec de la GDL, moins fine toutefois.

L'ajout de ferments acidifiants hyper rapides permet d'obtenir le pH objectif en 2 heures, mais nécessite de gérer précisément la température de maturation et le suivi des temps technologiques.

La technique la plus souple et la plus reproductible concerne l'ajout de GDL. Le plus proche d'une technologie classique consiste à rajouter un ferment mais nécessite un suivi attentif de l'évolution du pH, des cuves thermostatées. Nous préconisons donc l'ajout de GDL, les bactéries du levain acidifiant pouvant, si souhaité, être rajoutées par la suite.

### 3. Exemple 3 - Production d'arômes :

La dernière partie consiste à cultiver un microorganisme dans un milieu adéquat et selon une méthode appropriée afin de lui faire produire de l'arôme et pour obtenir des matrices aromatiques.

Ce « ferment aromatique », mêlant microorganismes et composants aromatiques, est ensuite incorporé à différentes concentrations (1, 3, 6 et 10% en poids par exemple, seuls ou en mélange) dans la pâte (matrice de texturation) avant texturation.

Le produit fini préserve les microorganismes vivants à la différence de certains concepts utilisant par exemple des « Enzymes Modified Cheese » ou des arômes exogènes.

Quatre microorganismes fortement producteurs d'arômes ont été cultivés sur milieux appropriés afin de produire différents arômes :
- *Hafnia alvéi* dans du lait écrémé avec 5g.L⁻¹ de méthionine et 10 g.L⁻¹ de glucose BHI-YE, à 30° C et en aérobiose pendant 48 heures ;
- *Yarrovia lipolytica* sur crème UHT (à 30 %), avec 10g.L⁻¹ de glucose / BHI-YE, à 22°C sous agitation 200 tours par minute pendant 48 h ;
- *Propionibacterium* sur sérum de fromagerie présure traité thermiquement, pendant 48h ;
- *Lactococcus lactis ssp lactis, ssp cremoris* et *var diacetylactis* sur lait écrémé enrichi à 16% de Matière Sèche par de la poudre de lait écrémé, pendant 24 h.

Ces matrices aromatiques (microorganismes et arômes) ont été introduites dans la matrice de texture avant acidification, salage et texturation par mélange le plus doux et régulier possible, par exemple dans un système de cuve raclée à 50 tours/minutes (cuve STEPHAN de 40 l).

Les produits finis ont été dégustés par un jury de 11 dégustateurs, au regard d'un témoin négatif (sans ajout de matrice aromatique).

Le jury attribue une note d'intensité aromatique comprise entre 0 et 5 à chaque denrée alimentaire dégustée, dans laquelle 0 correspond à une intensité aromatique nulle et 5 correspond à une intensité aromatique forte.

Pour la perception de l'intensité aromatique due à l'ajout des ferments aromatiques *Lactococcus lactis ssp lactis, ssp cremoris* et *var diacetylactis,* le jury a donné une note de :
- 1,1 / 5 pour la perception aromatique du témoin (sans ajout) et
- 3,4 / 5 pour l'essai avec 6% du « ferment ».

Les résultats de chromatographie en phase gazeuse couplée à la spectrométrie de masse (GC-MS) donnent :
- 250 ppm de diacétyle dans le témoin négatif et
- 450 ppm de diacétyle dans l'essai 6%.

Pour les rajouts de *Hafnia* à 6%, *Yarrovia* à 6%, les résultats sont de :
- 1,1 / 5 pour l'intensité aromatique du témoin et
- de respectivement 2,7 / 5 et 4,1 / 5 pour les 2 essais.

Les résultats CG - SM donnent :
- pour l'essai contenant 6% d'*Hafnia* :
   - 60 ppm de diacétyle dans le témoin pour 400 ppm dans l'essai,
   - 0,6 ppm de disulfure de diméthyle (DMDS) dans le témoin pour 150 dans l'essai,
   - 0,3 ppm de 3-méthylbutanol dans le témoin pour 874 ppm dans l'essai.
- pour l'essai contenant 6% de *Yarrovia :*
   - 5 ppm de 2-heptanone dans le témoin pour 102 ppm dans l'essai,
   - 2 ppm de méthylbutanal dans le témoin pour 745 ppm dans l'essai,
   - 200 ppm d'acide hexanoïque dans le témoin pour 1750 ppm dans l'essai.

Pour l'essai contenant 6% de *Propionibacterium :*
210 µg.g⁻¹ de C3 dans le témoin pour 9000 µg.g⁻¹ dans le l'essai 6% (4500 µg.g⁻¹ pour l'essai 3%).

Pour les essais contenant 2% de *Hafnia,* 2% de *Yarrovia,* 2% de *Propionibacterium* et 2% de *Lactococcus lactis* et 3% de chaque, les résultats sont respectivement de :
- pour C3 : 210 µg.g⁻¹ dans le témoin contre 1100 µg.g⁻¹ dans les essais 2% (et 3500 µg.g⁻¹ dans l'essai 3%) soit 5 et 17 fois plus ;
- pour le 1-butanol-2,3-méthyl : 4 ppb dans le témoin contre 60 ppb dans les essais 2% (et 95 ppb dans l'essai 3%), soit 15 et 24 fois plus ;
- pour la 2-heptanono : 1,5 ppb dans le témoin contre 4 ppb dans les essais 2% (et 4 ppb dans l'essai 3%) soit 2,6 fois plus ;
- pour le diacétyl : 450 ppb dans le témoin contre 750 ppb dans l'essai 2% (et 710 ppb dans l'essai 3%) soit environ 1,6 fois plus ;
- pour le DMDS : 0,3 ppb dans les essais 2% (et 0,8 dans l'essai 3%) contre 0,12 pour le témoin, soit 2,5 et 6,6 fois plus.

Le ferment « *Hafnia alvei »* est caractérisé par la présence :
- d'alcools ramifiés (2-methylpropanol ; 3-methylbutanol et 2-methylbutanol) et d'un alcool linéaire : éthanol,
- de composés soufrés (mercapto acetone, DMDS, DMTS, DMS et 3-(methylthio)-1-propanol),
- d'acétoine et
- de diacétyle.

Pour information, les alcools sont en général peu impliqués dans la flaveur des produits car leur seuil de détection est très élevé mais peuvent intervenir dans la formation de composés de flaveur notamment dans la formation d'esters.

Le ferment « *Yarrovia lipolytica* » est caractérisé par la présence :
- d'acides (notes piquant voire rance) : acide butanoïque, hexanoïque et octanoïque principalement,
- des méthylcétones (notes « bleu ») : 2-butanone, 2-pentanone, 2-heptanone, 2-nonanone, 2-undecanone et
- des aldéhydes (notes malté) : 2-méthylpropanal, 3-méthylbutanal et 2-méthylbutanal.

Le ferment combinant « *Hafnia alvei »* et « *Yarrovia lipolytica* » présente tous les composés retrouvés indépendamment dans le ferment « *Hafnia alvei »* et le ferment « *Yarrovia lipolytica* », mais à un niveau intermédiaire entre les deux.

Une combinaison intéressante, entre la complexité aromatique et la meilleure texture, est le complexe *Lactococcus lactis, Hafnia alvei, Yarrovia lipolytica et Propionibacterium* à la concentration de 2% chacun.

La combinaison de chacun des éléments à 3% donne un goût plus typé mais une texture moins structurée.

### 4. Exemple 4 - Substitut de fromage

### 4.1. Matériels et méthodes

### 4.1.1. Matrice de texture

Une suspension a été obtenue à partir de 100g de farine de soja et de 500 g d'eau. Le mélange a été ensuite filtré à travers un filtre sac (diamètre des pores de l'ordre du micromètre) pour obtenir un jus de soja.

Ce jus de soja a été traité thermiquement à 95°C pendant 10 min avec agitation douce, suivi d'un refroidissement à 30°C avec agitation ccntinue.

### 4.1.2. Matrices aromatiques

5U de MA (*Lactococcus lactis, crémoris*)*,* 5U de MD (*Lactococcus lactis, diacetylactis + leuconostoc crémoris*)*,* 5U de MY (*Streptococcus thermophilus et Lactobacillus delbrueckii lactis*) ont été diluées séparément dans 3 fois 1 L d'eau distillée.

Un jus de soja (dit encore « lait de soja »), a été incubé avec les dilutions MA, MD et MY:
- MA et MD, cultivé à 30°C pendant 29h,
- MY, cultivée à 40°C pendant 29h
pour obtenir trois matrices aromatiques « végétales ».

### 4.1.3. Texturation

Un substitut de fromage a été préparé à l'échelle du laboratoire par le mélange de la matrice de texture avec :
- 2% en poids de GDL,
- 3% en poids de MA,
- 3% en poids de MD, et
- 3% en poids de MY.

Le substitut de fromage est stocké dans un réfrigérateur (4-5°C) avant analyses GC-MS et évaluation sensorielle.

Un produit témoin a été obtenu par coagulation d'un jus de soja à partir de 2% en poids GDL.

### 4.1.4. Analyse des composés volatils

2,5 g de produit ont été placés dans un vial de 22 ml immédiatement scellé avec un bouchon et un septum hermétiques aux composés volatils. Les vials ont ensuite été congelés à -80°C jusqu'au moment de l'analyse. Aussi les échantillons congelés ont été placés sur le passeur par deux, 30 à 90 minutes avant analyse ceci afin d'éviter une trop grande évolution de ces échantillons contenant une flore bactérienne.

Les composés volatils de l'espace de tête des échantillons sont entrainés par un courant d'hélium, pigés, puis désorbés et séparés par chromatographie en phase gazeuse(CPG). Ils sont ensuite qualifiés et identifiés par spectrométrie de masse (SM).

### 4.1.5. Evaluation sensorielle

Le panel sensoriel a été composé de 14 personnes. Le jury a exprimé son avis pour les caractéristiques sensorielles suivantes : apparence, texture en bouche, couleur, saveur, odeur et acceptabilité globale.

### 4.2. Résultats

### 4.2.1. Composés volatiles du produit final

En utilisant l'analyse CG-SM pour déterminer les composées volatils du substitut de fromage obtenu, on a trouvé 35 molécules volatiles appartenant de façon prédominantes à des aldéhydes, des cétones des alcools et des acides.

La matrice aromatique MA est caractérisé par une plus grande de quantité d'aldéhydes (5,47E+09). La matrice aromatique MD a produit plus de cétones (1,90E+10) et d'acides (3,33E+10). La matrice aromatique MY a produit plus d'alcools (9,33E+09).

Le produit final est surtout riche en aldéhydes.

### 4.2.2. Evaluation sensorielle

Les scores pour la couleur et l'apparence, qui ont été les premiers facteurs décisifs pour déterminer l'acceptation ou le rejet d'un produit.

Il n'y pas eu de différence significative sur l'apparence et la couleur (P>0.05) entre le produit final et le produit témoin.

Tous les échantillons ont eu la couleur blanc crème similaire.

L'acceptabilité sensorielle de la texture, qui a été perçu par la sensation en bouche, a été un facteur déterminant de l'acceptabilité du produit pour les consommateurs.

Le jury a préféré le substitut de fromage selon l'invention (obtenu par apport de l'aromatisation ex situ).

### 4.3 Conclusion

Il a montré que le jus de soja possède les sucres nécessaires pour le développement de MA, MD, MY. Les ferments ont pu non seulement donner l'aromatisation au substitut de fromage, mais aussi ont joué un rôle de coagulant (acidifié le jus de soja) pendant la fabrication du produit final.

Le substitut de fromage, obtenu par l'aromatisation « ex situ », est préféré. Des composés volatils produits par les bactéries lactiques, pendant la fermentation, ont été caractérisés.

## Revendications

1. Procédé pour la fabrication d'une denrée alimentaire fromagère, avantageusement du type fromage, spécialité fromagère ou substitut de fromage,
lequel procédé est **caractérisé en ce qu'**il comprend les étapes successives suivantes :
a) une étape de fourniture A) :
- d'au moins une matrice aromatique, dans une consistance allant de liquide à pâteuse, issue d'une étape de culture d'au moins un microorganisme d'aromatisation dans un milieu de culture,
- d'au moins une matrice de texture, dans une consistance allant de liquide à pâteuse, qui est adaptée à réaliser la texture de ladite denrée alimentaire,
laquelle au moins une matrice de texture comprend entre 5% et 25% en poids de protéines et entre 3% et 30% en poids de matière grasse,
certaines au moins desdites protéines consistant en des protéines coagulantes qui sont aptes à coaguler pour former un gel,
puis
b) une étape B) de mélange de ladite au moins une matrice aromatique et de ladite au moins une matrice de texture dont les protéines coagulantes n'ont pas été soumises à une coagulation préalable,
puis
c) une étape de texturation C), au cours de laquelle le mélange issu de l'étape de mélange B) est soumis à des conditions physico-chimiques de texturation destinées à assurer la coagulation desdites protéines coagulantes pour former ledit gel, lesquelles conditions physico-chimiques de texturation sont adaptées en fonction de la texture finale recherchée pour ladite denrée alimentaire fromagère.
laquelle matrice de texture consiste en un rétentat qui est issu d'une technique de filtration d'un produit laitier et/ou d'un jus végétal et dans lequel est retenue notamment au moins une partie des protéines du produit laitier et/ou du jus végétal.

2. Procédé pour la fabrication d'une denrée alimentaire fromagère, selon la revendication 1, **caractérisé en ce que** la matrice de texture consiste en un préfromage liquide, consistant en un rétentat de la filtration d'un lait dans lequel sont retenus notamment les protéines du lait.

3. Procédé pour la fabrication d'une denrée alimentaire fromagère, selon l'une quelconque des revendications 1 ou 2, **caractérisé en ce que**, lors de l'étape de texturation C), les conditions physico-chimiques de texturation sont choisies parmi la température, le pH, la dose de coagulants et la dose de NaCl.

4. Procédé pour la fabrication d'une denrée alimentaire fromagère, selon la revendication 3, **caractérisé en ce que** l'étape de texturation C) est ajustée avec les conditions physico-chimiques de texturation suivantes :
- un pH compris entre 4 et 6,5,
- une température comprise entre 15°C et 50°C,
- une concentration en NaCl comprise entre 0,1 et 2 %, et
- le cas échéant, une dose de coagulant comprise entre 0 et 50 g / 100 L.

5. Procédé pour la fabrication d'une denrée alimentaire fromagère, selon l'une quelconque des revendications 1 à 4, **caractérisé en ce que**, lors de l'étape de mélange B), la matrice aromatique est comprise entre 0,5 et 50% en poids, de préférence 0,5 à 10% en poids, du mélange total, bornes incluses.

6. Procédé pour la fabrication d'une denrée alimentaire fromagère, selon l'une quelconque des revendications 1 à 5, **caractérisé en ce qu'**il comprend, suite à l'étape de texturation C), une étape d'application d'au moins un microorganisme de maturation de surface.

7. Procédé pour la fabrication d'une denrée alimentaire fromagère, selon l'une quelconque des revendications 1 à 6, **caractérisé en ce que** l'étape de fourniture consiste en :
- un procédé pour la production de ladite matrice aromatique, comprenant ladite étape de culture dudit au moins un microorganisme d'aromatisation dans ledit milieu de culture, et/ou
- un procédé pour la production de ladite matrice de texture, dans des conditions physico-chimiques destinées à éviter la formation du gel.

8. Procédé pour la fabrication d'une denrée alimentaire fromagère, selon la revendication 7, **caractérisé en ce que**, pour la fabrication d'un fromage du genre affiné, lors du procédé de production de la matrice aromatique, les microorganismes d'aromatisation comprennent des microorganismes d'affinage.

9. Procédé pour la production d'une denrée alimentaire fromagère, selon la revendication 8, **caractérisé en ce que** le milieu de culture consiste en du lait ou un produit obtenu à partir du lait choisi parmi la crème, les sérums de fromagerie, les perméats de filtration.

10. Procédé pour la fabrication d'une denrée alimentaire fromagère, selon la revendication 7, **caractérisé en ce que**, pour la fabrication d'un substitut de fromage, lors du procédé de production de la matrice aromatique, le milieu de culture consiste en un jus végétal, par exemple un jus choisi parmi le jus de soja, le jus de lupin, le jus d'avoine, le jus de riz ou un mélange d'au moins deux desdits jus.

11. Procédé pour la production d'une denrée alimentaire fromagère, selon l'une des revendications 8 à 10, **caractérisé en ce que** l'étape de culture est mise en œuvre sur une période de 1 à 4 jours.

12. Procédé pour la production d'une denrée alimentaire fromagère, selon l'une des revendications 1 à 11, **caractérisé en ce que**, lors de l'étape de mélange B), ledit au moins un microorganisme d'aromatisation est vivant.

## Patentansprüche

1. Verfahren zur Herstellung eines käseartigen Lebensmittels, vorzugsweise vom Typ Käse, käseartige Spezialität oder Käseersatzprodukt,
wobei das Verfahren **dadurch gekennzeichnet ist, dass** es die folgenden, nacheinander durchzuführenden Schritte umfasst:
a) einen Schritt des Bereitstellens A):
- mindestens einer aromatischen Matrix, in einer Konsistenz, die von flüssig bis pastös reichen kann, wobei sie aus einem Schritt des Anzüchtens mindestens eines Aromatisierungsmikroorganismus in einem Kulturmedium hervorgeht,
- mindestens einer Texturmatrix, in einer Konsistenz, die von flüssig bis pastös reichen kann, wobei sie dazu geeignet ist, dem Lebensmittel seine Textur zu verleihen,
wobei die mindestens eine Texturmatrix zwischen 5 % und 25 % nach Gewicht an Proteinen und zwischen 3 % und 30 % nach Gewicht an Fetten umfasst,
wobei zumindest einige der Proteine in koagulierenden Proteinen bestehen, die dazu befähigt sind, eine Koagulation unter Gelbildung zu erfahren,
und anschließend
b) einen Schritt B) des Vermischen der mindestens einen aromatischen Matrix und der mindestens einen Texturmatrix, wobei die koagulierenden Proteine der letzteren im Vorfeld keinerlei Koagulation unterzogen wurden,
und anschließend
c) einen Schritt der Texturgebung C), im Laufe dessen die Mischung, welche aus dem Schritt B) stammt, physikalisch-chemischen Texturgebungsbedingungen ausgesetzt wird, die dazu bestimmt sind, die Koagulation der koagulierenden Proteine unter Bildung eines Gels sicherzustellen, wobei die physikalisch-chemischen Texturgebungsbedingungen derart angepasst werden, dass sie der Endtextur entsprechen, wie sie für das käseartige Lebensmittel angestrebt wird,
wobei die Texturmatrix aus einem Retentat besteht, welches aus einer Technik zur Filtration eines Milchprodukts und/oder eines Pflanzensafts stammt und in welchem insbesondere mindestens ein Teil der Proteine des Milchprodukts und/oder des Pflanzensafts verbleibt.

2. Verfahren zur Herstellung eines käseartigen Lebensmittels nach Anspruch 1, **dadurch gekennzeichnet, dass** die Texturmatrix aus einer flüssigen Käsevorstufe besteht, bei welcher es sich um ein Retentat der Filtration einer Milch handelt, wobei darin insbesondere die Proteine der Milch verblieben sind.

3. Verfahren zur Herstellung eines käseartigen Lebensmittels nach einem beliebigen der Ansprüche 1 oder 2, **dadurch gekennzeichnet, dass** die physikalisch-chemischen Texturgebungsbedingungen im Schritt der Texturgebung C) aus der Temperatur, dem pH-Wert, der Dosis an Koagulationsmitteln und der Dosis an NaCl ausgewählt sind.

4. Verfahren zur Herstellung eines käseartigen Lebensmittels nach Anspruche 3, **dadurch gekennzeichnet, dass** der Schritt der Texturgebung C) mit den folgenden physikalisch-chemischen Texturgebungsbedingungen eingestellt wird:
- einem pH-Wert im Bereich von 4 bis 6,5,
- einer Temperatur im Bereich von 15 °C bis 50 °C,
- einer Konzentration an NaCl im Bereich von 0,1 bis 2 %, und
- gegebenenfalls einer Dosis an Koagulationsmittel im Bereich von 0 bis 50 g / 100 L.

5. Verfahren zur Herstellung eines käseartigen Lebensmittels, nach einem beliebigen der Ansprüche 1 bis 4, **dadurch gekennzeichnet, dass** im Schritt des Vermischens B) die aromatische Matrix 0,5 bis 50 Gewichts-%, vorzugsweise 0,5 bis 10 Gewichts-%, der Gesamtmischung ausmacht, einschließlich der Grenzwerte.

6. Verfahren zur Herstellung eines käseartigen Lebensmittels nach einem beliebigen der Ansprüche 1 bis 5, **dadurch gekennzeichnet, dass** es, im Anschluss an den Schritt der Texturierung C), einen Schritt des Aufbringens mindestens eines Mikroorganismus zur Oberflächenreifung umfasst.

7. Verfahren zur Herstellung eines käseartigen Lebensmittels nach einem beliebigen der Ansprüche 1 bis 6, **dadurch gekennzeichnet, dass** der Schritt des Bereitstellens in Folgendem besteht:
- einem Verfahren zur Herstellung der aromatischen Matrix, wobei es den Schritt des Anzüchtens des mindestens einen Aromatisierungsmikroorganismus in dem Kulturmedium umfasst, und/oder
- einem Verfahren zur Herstellung der Texturmatrix, unter physikalisch-chemischen Bedingungen, die dazu bestimmt sind, die Bildung des Gels zu verhindern.

8. Verfahren zur Herstellung eines käseartigen Lebensmittels nach Anspruch 7, **dadurch gekennzeichnet, dass** im Verfahren zur Herstellung der aromatischen Matrix die Aromatisierungsmikroorganismen Veredelungsmikroorganismen umfassen, um einen Käse veredelter Art herzustellen.

9. Verfahren zur Herstellung eines käseartigen Lebensmittels nach Anspruch 8, **dadurch gekennzeichnet, dass** es sich bei dem Kulturmedium um Milch oder um ein Produkt handelt, welches ausgehend von Milch erhalten wurde, wobei es aus Rahm, Käsereimolken, Filtrationspermeaten ausgewählt ist.

10. Verfahren zur Herstellung eines käseartigen Lebensmittels nach Anspruch 7, **dadurch gekennzeichnet, dass** es sich im Verfahren zur Herstellung der aromatischen Matrix bei dem Kulturmedium um einen Pflanzensaft handelt, beispielsweise einen Saft, der aus Sojasaft, Lupinensaft, Hafersaft, Reissaft oder in einer Mischung mindestens zweier dieser Säfte ausgewählt ist, um ein Käseersatzprodukt herzustellen.

11. Verfahren zur Herstellung eines käseartigen Lebensmittels nach einem der Ansprüche 8 bis 10, **dadurch gekennzeichnet, dass** der Schritt des Anzüchtens über einen Zeitraum von 1 bis 4 Tagen durchgeführt wird.

12. Verfahren zur Herstellung eines käseartigen Lebensmittels nach einem der Ansprüche 1 bis 11, **dadurch gekennzeichnet, dass** der mindestens eine Aromatisierungsmikroorganismus im Schritt des Vermischens B) lebend ist.

## Claims

1. Method for manufacturing a cheese-based food product, advantageously a cheese, cheese specialty or cheese substitute,
said method is **characterised in that** it comprises the following consecutive steps:
a) a providing step A) of:
- at least one flavouring matrix, in a consistency that ranges from liquid to pasty, said flavouring matrix resulting from a step of cultivating at least one flavour producing microorganism in a culture medium,
- at least one texture matrix, in a consistency that ranges from liquid to pasty, said texture matrix being suitable for providing the texture of said food product,
said at least one texture matrix comprises between 5% and 25% by weight in proteins and between 3% and 30% by weight in fat,
at least some of said proteins consisting of coagulating proteins which are able to coagulate in order to form a gel,
then
b) a mixing step B) of said at least one flavouring matrix and of said at least one texture matrix of which the coagulating proteins were not subjected to a prior coagulation,
then
c) a texturing step C), during which the mixture coming from the mixing step B) is subjected to physicochemical texturing conditions which are intended to ensure the coagulation of said coagulating proteins in order to form said gel, said physical-chemical conditions of texturing are adapted according to the final texture sought for said cheese-based food product,
wherein the texture matrix consists in a retentate which comes from a technique of filtering a dairy product and/or a plant juice and wherein is retained in particular at least one portion of the proteins of the dairy product and/or of the plant juice.

2. Method for manufacturing a cheese-based food product, according to claim 1, **characterised in that** the texture matrix consists of a liquid pre-cheese, consisting in a retentate of the filtration of a milk wherein in particular the milk proteins are retained.

3. Method for manufacturing a cheese-based food product, according to any of claims 1 or 2, **characterised in that**, during the texturing step C), the physical-chemical conditions of texturing are chosen from among the temperature, pH, the dose of coagulants and the dose of NaCl.

4. Method for manufacturing a cheese-based food product, according to claim 3, **characterised in that** the texturing step C) is adjusted with the following physical-chemical conditions of texturing:
- a pH between 4 and 6.5,
- a temperature between 15°C and 50°C,
- a concentration in NaCl between 0.1 and 2%, and
- where applicable, a dose of coagulant between 0 and 50 g / 100 L.

5. Method for manufacturing a cheese-based food product, according to any of claims 1 to 4, **characterised in that**, during the step of mixing B), the flavouring matrix is between 0.5 and 50% by weight, more preferably 0.5 to 10% by weight, of the total mixture, limits included.

6. Method for manufacturing a cheese-based food product, according to any of claims 1 to 5, **characterised in that** it comprises, following the texturing step C), a step of applying at least one surface maturation microorganism.

7. Method for manufacturing a cheese-based food product, according to any of claims 1 to 6, **characterised in that** the providing step consists in:
- a method for the production of said flavouring matrix, comprising said step of culture of said at least one flavour producing microorganism in said culture medium, and/or
- a method for the production of said texture matrix, in physical-chemical conditions intended to prevent the gel from forming.

8. Method for manufacturing a cheese-based food product, according to claim 7, **characterised in that**, for the manufacture of a cheese of the ripened type, during the method of production of the flavouring matrix, the flavouring microorganisms include ripening microorganisms.

9. Method for the manufacturing of a cheese-based food product, according to claim 8, **characterised in that** the culture medium consists of milk or a product obtained using milk chosen from cream, cheese-making wheys, filtration permeates.

10. Method for manufacturing a cheese-based food product, according to claim 7, **characterised in that**, for the manufacture of a cheese substitute, during the method of production of the flavouring matrix, the culture medium consists in a plant juice, for example a juice chosen from soy juice, lupin juice, oat juice, rice juice or a mixture of at least two of said juices.

11. Method for the manufacturing of a cheese-based food product, according to one of claims 8 to 10, **characterised in that** the step of culture is implemented over a period of 1 to 4 days.

12. Method for the manufacturing of a cheese-based food product, according to one of claims 1 to 11, **characterised in that**, during the step of mixing B), said at least one flavouring microorganism is alive.
